# EUROPEAN PATENT APPLICATION

(11) **EP 4 549 238 A1**
(43) Date of publication of application: **07.05.2025**
(21) Application number: 24208641.1
(22) Date of filing: 24.10.2024
(51) Int. Cl.: B60N 2/22

(54) **SLIDING INTERLOCKING RECLINING DEVICE FOR VEHICLE SEAT**

(30) Priority: 02.11.2023 KR 20230149620
(71) Applicant: Hyundai Transys Inc., Chungcheongnam-do 31930 (KR)
(72) Inventor: JUNG, Hyeon Woo, 18463 Hwaseong-si, Gyeonggi-do (KR); KANG, Seok In, 18463 Hwaseong-si, Gyeonggi-do (KR); KIM, Su Bin, 18463 Hwaseong-si, Gyeonggi-do (KR); PARK, Ryang Oh, 18463 Hwaseong-si, Gyeonggi-do (KR); SEO, Sung Lak, 18463 Hwaseong-si, Gyeonggi-do (KR); YANG, Ji Ho, 18463 Hwaseong-si, Gyeonggi-do (KR)
(74) Representative: Viering, Jentschura & Partner mbB Patent- und Rechtsanwälte

(57) **Abstract**

A sliding interlocking reclining device for a vehicle seat is configured to implement a reclining operation linked to a sliding operation of the vehicle seat. The sliding interlocking reclining device has a simpler structure than that of the related art, thereby reducing cost and weight and preventing occurrence of joint noise between parts during driving of a vehicle.

## Description

### BACKGROUND

### (a) Technical Field

The present disclosure relates to a sliding interlocking reclining device for a vehicle seat, and more specifically, to a sliding interlocking reclining device for a vehicle seat configured to implement a reclining operation linked to a sliding operation of the vehicle seat.

### (b) Background Art

In general, a vehicle includes a front seat disposed at the front side of the vehicle interior and a rear seat disposed at the rear side of the vehicle interior.

A vehicle seat is formed of a seat cushion that supports the hip and the thigh of a passenger and a seatback that supports the back of a passenger. The seat cushion is slidably moved forward, and the seatback is reclinable rearward.

A conventional seat separately includes one operating lever for sliding of a seat cushion and the other operating lever for reclining of a seatback, which may cause inconvenience in operation.

Accordingly, a seat sliding interlocking reclining device has recently been applied to a vehicle seat.

In the case of a seat to which a conventional seat sliding interlocking reclining device is applied, a latch unit provided on a seatback frame is engaged with and coupled to a striker provided on a vehicle body, and a lower portion of the seatback frame is rotatably coupled to a rear end of a seat cushion frame.

The latch unit is configured to release coupling with the striker when the seat cushion frame is slidably moved forward. As a result, when the seat cushion frame is slidably moved forward, coupling between the latch unit and the striker is released, and the seatback frame is reclined rearward.

However, the conventional seat sliding interlocking reclining device has a complicated operating structure between the latch unit and the striker due to characteristics of a coupling structure using latch-type parts. Accordingly, there is a problem in that cost and weight are increased, and vibration and joint noise (noise between parts) occur during driving of a vehicle.

The above information disclosed in this Background section is only for enhancement of understanding of the background of the disclosure, and therefore it may contain information that does not form the prior art that is already known in this country to a person of ordinary skill in the art.

### SUMMARY OF THE DISCLOSURE

The present disclosure has been made in an effort to solve the above-described problems associated with the prior art, and it is an object of the present disclosure to provide a sliding interlocking reclining device for a vehicle seat, wherein the sliding interlocking reclining device has a simpler structure than that of the related art, thereby making it possible not only to reduce cost and weight, but also to prevent occurrence of joint noise (noise between parts) during driving of a vehicle.

The objects of the present disclosure are not limited to the above-mentioned objects, and other technical objects not mentioned herein will be clearly understood by those skilled in the art to which the present disclosure pertains from the detailed description of the embodiments.

In one aspect, the present disclosure provides a sliding interlocking reclining device for a vehicle, the sliding interlocking reclining device including a seat cushion frame being forwardly slidable when unlocked, a seatback frame coupled to a rear end of the seat cushion frame through a free hinge, a main bracket having an upper portion fixed to an upper end of the seatback frame and a lower portion having a guide hole formed therein, and a vehicle body connection pin configured to pass through the guide hole and coupled to a vehicle body coupling bracket, wherein the guide hole is elongate and extends in a direction that allows the seatback frame to move downwards without interference with the vehicle body connection pin when the seat cushion frame is slidably moved forward.

In an embodiment, the vehicle body connection pin may extend through a connection pin coupling hole of a connector bracket, and the connector bracket may be coupled to the lower portion of the main bracket though a hinge pin and may include a rear bracket part formed with the connection pin coupling hole and a front bracket part formed with a cable connection hole.

In another embodiment, the front bracket part may be connected to a folding strap through a drive cable connected to the cable connection hole, and when the folding strap is manipulated, the connector bracket may configured to be rotated such that the vehicle body connection pin may be decoupled from a hook portion provided on the vehicle body coupling bracket.

In still another embodiment, the hook portion may be provided at a front end of the vehicle body coupling bracket and may be formed to receive the vehicle body connection pin.

In yet another embodiment, the vehicle body coupling bracket may have an inclined surface portion that is formed to contact the vehicle body connection pin and is configured to guide an upward movement of the vehicle body connection pin when the seatback frame is unfolded.

In still yet another embodiment, the inclined surface portion may be provided forwardly of the hook portion.

In a further embodiment, the main bracket may be provided with a spring member being compressible by rotation of the connector bracket, and wherein the spring member may have a first end fixed to the vehicle body connection pin and a second end fixed to a spring fixing part of the main bracket.

In another further embodiment, the main bracket may be provided with an elastic guide member assembled onto the guide hole.

Other aspects and embodiments of the disclosure are discussed infra.

It is understood that the terms "vehicle", "vehicular", and other similar terms as used herein are inclusive of motor vehicles in general, such as passenger automobiles including sport utility vehicles (SUV), buses, trucks, various commercial vehicles, watercraft including a variety of boats and ships, aircraft, and the like, and include hybrid vehicles, electric vehicles, plug-in hybrid electric vehicles, hydrogen-powered vehicles, and other alternative fuel vehicles (e.g., fuels derived from resources other than petroleum). As referred to herein, a hybrid vehicle is a vehicle that has two or more sources of power, for example, vehicles powered by both gasoline and electricity.

The above and other features of the disclosure are discussed infra.

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 is a diagram showing a sliding interlocking reclining device for a vehicle seat according to an embodiment of the present disclosure;
FIGs. 2 and 3 are diagrams each showing a main configuration of the sliding interlocking reclining device for the vehicle seat according to the embodiment of the present disclosure;
FIG. 4 is a diagram showing a reclining mode of the sliding interlocking reclining device for the vehicle seat according to the embodiment of the present disclosure;
FIG. 5 is a diagram showing a folding mode of the sliding interlocking reclining device for the vehicle seat according to the embodiment of the present disclosure; and
FIG. 6 is a diagram showing an unfolding mode of the sliding interlocking reclining device for the vehicle seat according to the embodiment of the present disclosure.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, reference will be made in detail to various embodiments of the present disclosure, examples of which are illustrated in the accompanying drawings and described below. Items included in the accompanying drawings are schematically illustrated to easily explain the embodiments of the present disclosure and may be different from an actually implemented form.

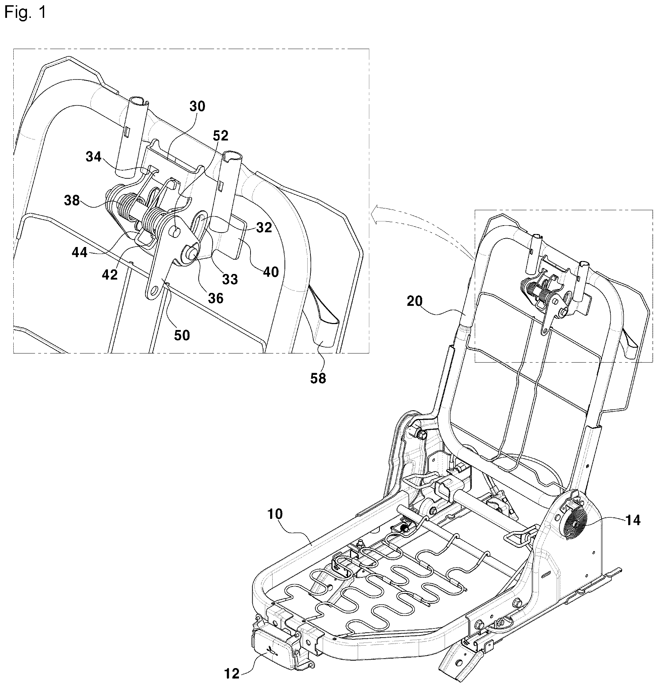

As shown in FIG. 1, a sliding interlocking reclining device for a vehicle seat according to an embodiment of the present disclosure includes a seat cushion frame 10 capable of sliding in the forward-and-rearward direction of a vehicle, a seatback frame 20 coupled to the rear end of the seat cushion frame 10, a main bracket 30 mounted on the upper end of the seatback frame 20, and a vehicle body connection pin 36 assembled with the main bracket 30.

The seat cushion frame 10 has a sliding lever 12 provided at the front end thereof and configured to slide forward when the sliding lever 12 is unlocked. That is, the sliding lever 12 locks sliding movement of the seat cushion frame 10, and when the sliding lever 12 is unlocked, the seat cushion frame 10 is slidably moved forward.

Although not shown in the drawing, the seat cushion frame 10 may has a sliding unit (not shown) provided at the lower end thereof and configured to perform forward-and-rearward movement thereof. The seat cushion frame 10 is slidably moved in the forward-and-rearward direction when the sliding lever 12 is operated to unlock the sliding unit.

The lower end of the seatback frame 20 is connected to the rear end of the seat cushion frame 10 through a free hinge 14. That is, the seatback frame 20 is freely rotatably connected to the rear end of the seat cushion frame 10 through the free hinge 14.

When the seat cushion frame 10 is slidably moved forward, the seatback frame 20 is linked to forward movement of the seat cushion frame 10 through the free hinge 14 and is reclined rearward.

In order to perform reclining of the seatback frame 20 when the seat cushion frame 10 is slidably moved forward, the main bracket 30 includes an upper portion fixed to an upper portion of the seatback frame 20 and a lower portion having a pair of guide holes 32 formed therein and configured to allow reclining of the seatback frame 20. The guide holes 32 are respectively provided on the left side of the main bracket 30 and the right side thereof.

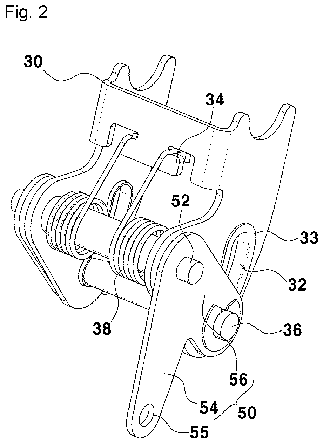

As shown in FIGs. 1 to 3, each of the guide holes 32 is formed at the lower portion of the main bracket 30 and configured to allow the vehicle body connection pin 36 to pass therethrough.

The vehicle body connection pin 36 passes through each of the guide holes 32 so as to extend in the left-and-right direction of the vehicle and is connected and coupled to a hook portion 42 of a vehicle body coupling bracket 40 fixed to a vehicle body.

In this manner, the guide hole 32 is connected to the vehicle body connection pin 36 coupled to the vehicle body coupling bracket 40, thereby restricting the position and posture of the seatback frame 20.

Accordingly, when the seat cushion frame 10 is slidably moved forward, the guide hole 32 extends in a direction allowing the seatback frame 20 to move forward or downwards without interference with the vehicle body connection pin 36.

That is, the guide hole 32 is formed to extend in a direction allowing the seatback frame 20 to be reclined in conjunction with forward sliding of the seat cushion frame 10, thereby making it possible to release, when the seat cushion frame 10 is slidably moved forward, restraint of the seatback frame 20 by the vehicle body connection pin 36.

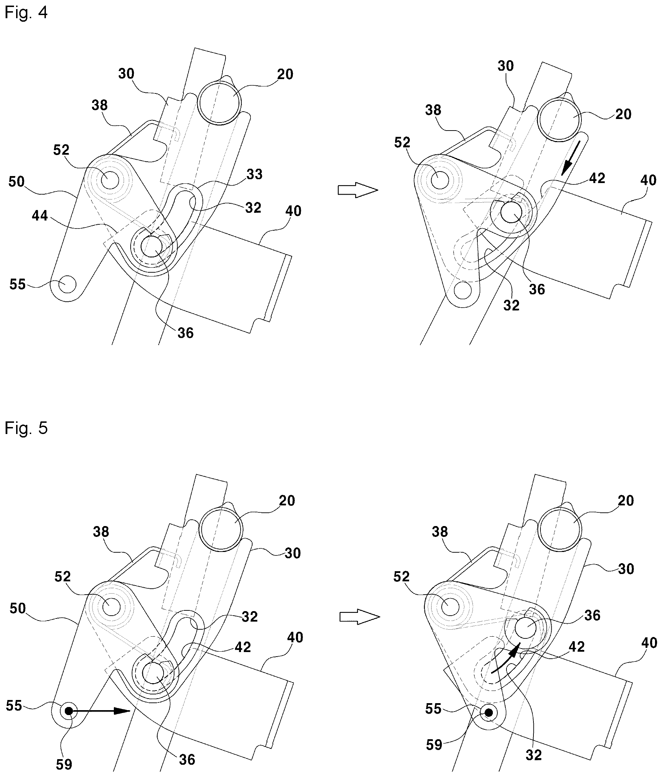

Referring to FIG. 4, the guide hole 32 is formed to extend in the vertical direction such that the seatback frame 20 is movable downwards and reclinable rearward when the seat cushion frame 10 is slidably moved forward.

In order to perform smooth reclining of the seatback frame 20, the guide hole 32 may be formed to extend in a curved, elongate shape that may be oriented in a diagonal direction. Here, the guide hole 32 may be disposed obliquely so that the upper end of the guide hole 32 is located behind the lower end thereof.

Further, as shown in FIG. 4, when the seat cushion frame 10 is not slidably moved forward, the vehicle body connection pin 36 is located at the lower end of the guide hole 32. When the seat cushion frame 10 is slidably moved forward, the seatback frame 20 is moved downwards, and the vehicle body connection pin 36 is located at the upper end of the guide hole 32.

The vehicle body connection pin 36 is fixed without movement thereof in a state of being coupled to the hook portion 42 of the vehicle body coupling bracket 40. Here, when the seatback frame 20 is moved downwards, the vehicle body connection pin 36 is moved in the upward direction.

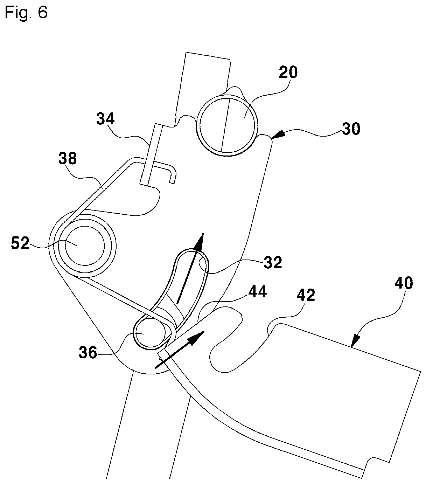

Meanwhile, in order to allow the seatback frame 20 to be rotatably folded relative to the seat cushion frame 10, the hook portion 42 is provided at the front end of the vehicle body coupling bracket 40 and is formed to have an opening in an upward region of the vehicle body coupling bracket 40 so as to receive the vehicle body connection pin 36, as shown in FIGs. 5 and 6.

Accordingly, when the seatback frame 20 is folded toward the seat cushion frame 10, the vehicle body connection pin 36 may be detached from the hook portion 42 so as to be separated from the vehicle body coupling bracket 40.

In addition, the vehicle body connection pin 36 extends through a connection pin coupling hole 57 of the connector bracket 50.

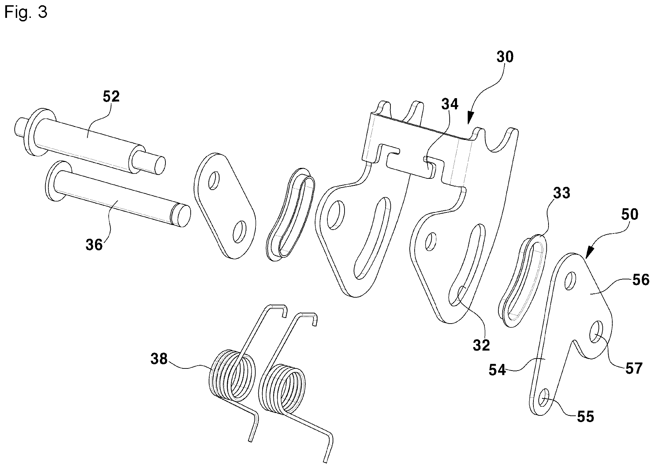

The connector bracket 50 is rotatably coupled to the lower portion of the main bracket 30 through a hinge pin 52. As shown in FIG. 3, the connector bracket 50 includes a rear bracket part 56 having the connection pin coupling hole 57 formed therein and a front bracket part 54 having a cable connection hole 55 formed therein. The front bracket part 54 and the rear bracket part 56 may be distinguished from each other by the hinge pin 52. The hinge pin 52 is located forwardly of the guide hole 32 on the main bracket 30.

The connector bracket 50 is connected to the vehicle body connection pin 36 through the connection pin coupling hole 57 and is connected to a folding strap 58 in a linkable manner through the cable connection hole 55. The folding strap 58 is operated by a user for a folding operation of the seatback frame 20.

The vehicle body connection pin 36 is located on the outside of the connector bracket 50 and the main bracket 30. The vehicle body connection pin 36 passes through the guide hole 32 of the main bracket 30, the hook portion 42 of the vehicle body coupling bracket 40, and the connection pin coupling hole 57 of the connector bracket 50 in a state of being located on the inside of the main bracket 30.

The front bracket part 54 of the connector bracket 50 is connected to the folding strap 58 through a drive cable 59 connected to the cable connection hole 55. As shown in FIG. 5, when the folding strap 58 is operated, the drive cable 59 is pulled, and the connector bracket 50 is rotated counterclockwise around the hinge pin 52. In this case, the vehicle body connection pin 36 is moved upwards and is detached from the hook portion 42 of the vehicle body coupling bracket 40. The vehicle body connection pin 36 is pivotally movable along the guide hole 32 of the main bracket 30, and the folding strap 58 may be manually operated by a user.

Accordingly, coupling between the vehicle body connection pin 36 and the vehicle body coupling bracket 40 is released. Accordingly, locking of the seatback frame 20 is released, and the seatback frame 20 becomes rotatable and foldable.

In other words, the vehicle body connection pin 36 is detached from the hook portion 42 and is decoupled from the vehicle body coupling bracket 40, thereby allowing the folding operation of the seatback frame 20. The seatback frame 20 may be folded from an upright state to a lying state so as to face the seat cushion frame 10.

Before the seatback frame 20 is folded, the vehicle body connection pin 36 is in a state of being detachably inserted into the hook portion 42 and separably coupled to the vehicle body coupling bracket 40. The hook portion 42 is formed to allow upward movement of the vehicle body connection pin 36 when the connector bracket 50 is rotated by the folding strap 58. The hook portion 42 may allow only movement of the vehicle body connection pin 36 by rotation of the connector bracket 50 and may block and restrict any other movement.

In addition, the vehicle body coupling bracket 40 has an inclined surface portion 44 formed forwardly of the hook portion 42 and provided to perform reconnection with the vehicle body connection pin 36 when the seatback frame 20 is unfolded.

The inclined surface portion 44 is a portion that comes into contact with the vehicle body connection pin 36 that is moved toward the vehicle body coupling bracket 40 when the seatback frame 20 is unfolded. Further, the inclined surface portion 44 is provided at the front end of the vehicle body coupling bracket 40 and is formed to have a predetermined inclined surface portion so as to guide upward movement of the vehicle body connection pin 36.

Referring to FIG. 6, when the seatback frame 20 is unfolded from the seat cushion frame 10 and is positioned upright, the vehicle body connection pin 36 assembled with the guide hole 32 of the main bracket 30 and the connection pin coupling hole 57 of the connector bracket 50 is rotatably moved with the seatback frame 20 around the free hinge 14 and comes into contact with the inclined surface portion 44.

After coming into contact with the inclined surface portion 44, the vehicle body connection pin 36 is further rotatably moved until passing through the upper end of the inclined surface portion 44. In this case, the connector bracket 50 is rotated in the direction of compressing a spring member 38. When the vehicle body connection pin 36 is further rotated after contacting the inclined surface portion 44, the connector bracket 50 is rotated around the hinge pin 52 with the vehicle body connection pin 36. When the vehicle body connection pin 36 comes into contact with the inclined surface portion 44 and is further rotated, the vehicle body connection pin 36 is rotated around the free hinge 14 with the seatback frame 20 and is simultaneously rotated around the hinge pin 52 with the connector bracket 50.

After passing through the upper end of the inclined surface portion 44, the vehicle body connection pin 36 is rotated downwards by elastic restoring force of the spring member 38 (rotated clockwise with reference to FIG. 6) so as to be seated in the hook portion 42. As a result, the vehicle body connection pin 36 is caught and fixed in the hook portion 42 so as to fixedly support the seatback frame 20 in the upright state.

When the vehicle body connection pin 36 comes into contact with the inclined surface portion 44 and is further rotated, the spring member 38 is compressed by rotation of the connector bracket 50. In this case, the vehicle body connection pin 36 is seated in the hook portion 42 through elastic restoring force generated at this time.

The hinge pin 52 passes through the spring member 38 and is supportedly assembled therewith. Further, the spring member 38 has a first end fixedly coupled to the vehicle body connection pin 36 and a second end fixedly coupled to a spring fixing part 34 of the main bracket 30. The spring fixing part 34 is provided on the upper portion of the main bracket 30.

Additionally, an elastic guide member 33 is assembled onto the guide hole 32 of the main bracket 30 and is configured to prevent occurrence of collision noise caused by the vehicle body connection pin 36. The elastic guide member 33 may be injection-molded with an elastic material such as rubber.

The sliding interlocking reclining device for the vehicle seat of the present disclosure configured as described above may be applied to various vehicle seats. For example, the sliding interlocking reclining device may be applied to a rear seat of a pickup truck.

As is apparent from the above description, the present disclosure provides a sliding interlocking reclining device for a vehicle seat configured to provide a simpler structure than that of the related art, thereby making it possible not only to reduce cost and weight, but also to prevent occurrence of joint noise (noise between parts) during driving of a vehicle.

The effects of the present disclosure are not limited to the above-mentioned effects, and other effects not mentioned herein will be clearly understood by those skilled in the art to which the present disclosure pertains from the detailed description of the embodiments.

As described above, the embodiments of the present disclosure have been described in detail, and the terms or words used in this specification and claims shall not be construed as being limited to typical or dictionary meanings. In addition, since the embodiments described in this specification and the configurations shown in the drawings are only one embodiments of the present disclosure, the scope of the present disclosure is not limited to the above-described embodiments. Various modifications and improvements made by those skilled in the art using the basic concept of the present disclosure defined in the following claims also fall within the scope of the present disclosure.

## Claims

1. A sliding interlocking reclining device for a seat, the sliding interlocking reclining device comprising:
a seat cushion frame being forwardly slidable when unlocked;
a seatback frame coupled to a rear end of the seat cushion frame through a free hinge;
a vehicle body coupling bracket fixed to a vehicle body;
a main bracket including an upper portion fixed to an upper end of the seatback frame and a lower portion including a guide hole formed therein; and
a vehicle body connection pin configured to pass through the guide hole and coupled to the vehicle body coupling bracket,
wherein the guide hole has an elongate shape that extend in a direction that allows the seatback frame to move downward without interference from the vehicle body connection pin when the seat cushion frame is slidably moved forward.

2. The sliding interlocking reclining device of claim 1, wherein:
the vehicle body connection pin is configured to extend through a connection pin coupling hole of a connector bracket, and
the connector bracket is coupled to the lower portion of the main bracket through a hinge pin and comprises a rear bracket part formed with the connection pin coupling hole and a front bracket part formed with a cable connection hole.

3. The sliding interlocking reclining device of claim 2, wherein the front bracket part is connected to a folding strap through a drive cable connected to the cable connection hole and, when the folding strap is manipulated, the connector bracket is configured to be rotated such that the vehicle body connection pin is decoupled from a hook portion provided on the vehicle body coupling bracket.

4. The sliding interlocking reclining device of claim 3, wherein the hook portion is provided at a front end of the vehicle body coupling bracket and is formed to receive the vehicle body connection pin.

5. The sliding interlocking reclining device of one of claims 1-4, wherein the vehicle body coupling bracket has an inclined surface portion that is formed to contact the vehicle body connection pin and is configured to guide an upward movement of the vehicle body connection pin when the seatback frame is unfolded.

6. The sliding interlocking reclining device of claim 5 in combination with claim 3 or 4, wherein the inclined surface portion is provided forwardly of the hook portion.

7. The sliding interlocking reclining device of one of claims 2-4 or 6, or of claim 5 provided that in combination with claim 2, wherein the main bracket is provided with a spring member being compressible by rotation of the connector bracket, and wherein the spring member includes a first end fixed to the vehicle body connection pin and a second end fixed to a spring fixing part of the main bracket.

8. The sliding interlocking reclining device of one of claims 1-7, wherein the main bracket is provided with an elastic guide member assembled onto the guide hole.
